# EUROPÄISCHE PATENTSCHRIFT

(11) **EP 3 331 618 B1**
(45) Veröffentlichungstag und Bekanntmachung des Hinweises auf die Patenterteilung: **27.04.2022**
(21) Anmeldenummer: 16751249.0
(22) Anmeldetag: 03.08.2016
(51) Int. Cl.: A62B 7/10, A62B 23/02, A62B 19/00, A62B 18/02, B01D 53/04

(54) **KARTUSCHE FÜR EINE ATEMSCHUTZMASKE UND ATEMSCHUTZMASKE**
CARTRIDGE FOR A BREATHING MASK, AND A BREATHING MASK
CARTOUCHE POUR MASQUE DE PROTECTION RESPIRATOIRE ET MASQUE DE PROTECTION RESPIRATOIRE

(30) Priorität: 03.08.2015 DE 102015009829
(43) Veröffentlichungstag der Anmeldung: 13.06.2018
(73) Patentinhaber: MANN+HUMMEL GmbH, 71636 Ludwigsburg (DE)
(72) Erfinder: STINZENDÖRFER, Joachim, 67346 Speyer (DE); LEHNERT, Susanne, 54518 Altrich (DE); JEBLICK, Christopher, 67105 Schifferstadt (DE); MÄRTZ, Mike, 67376 Harthausen (DE); ACKERMANN, Steffen, 67376 Harthausen (DE); DIERSCH, Stefan, 95367 Trebgast (DE)
(74) Vertreter: Mann + Hummel Intellectual Property
(86) Internationale Anmeldenummer: PCT/EP2016/068584
(87) Internationale Veröffentlichungsnummer: WO 2017/021470

(56) Entgegenhaltungen:
- EP-A1- 0 045 516
- EP-A1- 0 045 516
- EP-A2- 0 159 697
- EP-A2- 0 159 697
- WO-A1-97/45154
- WO-A1-97/45154
- WO-A2-01/78839
- WO-A2-01/78839
- DE-A1-102013 008 389
- DE-A1-102013 008 389
- DE-C- 420 090
- DE-C- 420 090

## Beschreibung

### Technisches Gebiet

Die Erfindung betrifft eine Kartusche für eine Atemschutzmaske mit einem Adsorptionsfilter, insbesondere zum Schutz beim Umgang mit gefährlichen, gesundheitsschädlichen Stoffen sowie eine Atemschutzmaske mit einer Kartusche.

### Stand der Technik

Als Atemschutzmasken zum Schutz der Betreiber beim Umgang mit gefährlichen, gesundheitsschädlichen Stoffen, aber auch zur Begehung von möglicherweise gefährdenden Umgebungen, wie beispielsweise nach Bränden, werden üblicherweise zur Filterung der Atemluft Gesichtsmasken mit Gasfilterkartuschen verwendet, die vorwiegend aus einem Partikel-Aerosolfiltermedium und einer Schüttung von Aktivkohle bestehen. Aus der DE 10 2013 008 389 A1 ist ein Filterelement bekannt mit einem Filterkörper, mit einer in sich geschlossenen Außenseite, die eine in sich geschlossene Innenseite umgibt, welche einen zentralen Strömungsraum umschließt. Dabei ist zwischen Außenseite und Innenseite ein Filtermedium angeordnet. Der Filterkörper umfasst eine Wickellage mit einem Adsorbens wie beispielsweise Aktivkohle. Durch die Ausgestaltung mit Wickellagen bietet das Filterelement eine ausreichend hohe Kontaktzeit des zu filternden Mediums mit dem Adsorbens, welches das zu filternde Medium dabei reinigt. Das Filterelement ist beispielsweise zur Reinigung der Kathodenluft eines Brennstoffzellensystems vorgesehen. Der Filterkörper umfasst einen Trägerkörper, auf den eine Schicht mit einem Adsorbens aufgetragen ist. Durch Aufwickeln des Trägerkörpers, beispielsweise auf einen geeigneten Innenkern bis zum gewünschten Durchmesser bzw. gewünschten Querschnitt, erhält der Trägerkörper seine Form. Dabei besteht der Trägerkörper zur Immobilisierung des Adsorbens aus Lagen bandförmigen Trägermaterials, zwischen denen eine Adsorbenslage angeordnet ist.

Eine typische Kartusche für eine Atemschutzmaske ist dem entgegen aus EP0159697 A2 bekannt.

### Offenbarung der Erfindung

Eine Aufgabe der Erfindung ist es, eine Kartusche für eine Atemschutzmaske zu schaffen, welche eine robuste Einsatzweise zulässt und gleichzeitig einen guten Wirkungsgrad über einen langen Zeitraum aufweist.

Eine weitere Aufgabe der Erfindung ist es, eine Atemschutzmaske mit einer Kartusche zu schaffen, welche eine robuste Einsatzweise zulässt und gleichzeitig einen guten Wirkungsgrad über einen langen Zeitraum aufweist.

Die vorgenannten Aufgaben werden durch die Merkmale des unabhängigen Anspruchs gelöst Günstige Ausgestaltungen und Vorteile der Erfindung ergeben sich aus den weiteren Ansprüchen, der Beschreibung und der Zeichnung.

Es wird eine Kartusche für eine Atemschutzmaske vorgeschlagen, mit einem in einem Gehäuse angeordneten Adsorptionsfilterabschnitt. Dabei weist der Adsorptionsfilterabschnitt ein Trägermedium und eine Aktivkohleschicht auf, in der Aktivkohlepartikel durch Zusatz eines Fixierungsmittels immobilisiert sind, wobei ein durchströmbares Verbindungselement zum Befestigen des Gehäuses an der Atemschutzmaske vorgesehen ist, wobei das Verbindungselement mit seinem Strömungskanal an einer Reinluftseite des Adsorptionsfilterabschnitts angeordnet ist und wobei das Gehäuse einen Gehäusemantel aufweist, der mit dem Verbindungselement lösbar verbindbar ist.

Die erfindungsgemäße Kartusche kann dazu verwendet werden, auf physikalischem und/oder chemischem Wege Verunreinigungen in einem Gasstrom durch Adsorption bzw. Absorption herauszufiltern. Die Kartusche kann zur Filterung von Atemluft in einer möglicherweise gefährdenden Umgebung, wie beispielsweise nach Bränden, eingesetzt werden, indem gasförmige Verunreinigungen in der Luft adsorbiert werden. Die Filtereinrichtung weist zum einen ein Trägermedium und zum anderen als Adsorptionsmittel Aktivkohle auf, welche erfindungsgemäß durch ein Fixierungsmittel immobilisiert ist. Dies ermöglicht es, dicht gepackt Aktivkohleschichten zu realisieren, die ihre Struktur im Unterschied zu losen Aktivkohleschüttungen auch bei mechanischer Beanspruchung sowie über einen langen Betriebszeitraum beibehalten; Verschiebungen und lokale Verdichtungen der Aktivkohlepartikel, die zu einer Beeinträchtigung der Adsorptionsleistung führen können, werden vermieden. Beeinträchtigungen der Adsorptionsleistung beruhen zum Beispiel auf lokalen Fehlstellen in der Schüttung, was zu Leckagen führen kann. Bei der erfindungsgemäßen Ausführung ist durch die Immobilisierung der Aktivkohlepartikel die Luftdurchlässigkeit höher als bei losen Schüttungen mit Aktivkohlepartikeln vergleichbaren Korndurchmessers. Die Immobilisierung der Aktivkohlepartikel hat des Weiteren den Vorteil, dass verschiedenartige Geometrien der Filtereinrichtung bzw. der Lagen des Trägermediums und der Aktivkohle erzeugt werden können. In Betracht kommen sowohl runde, ovale, rechteckige als auch beliebige andere Zuschnitte.

Gemäß einer vorteilhaften Ausgestaltung kann wenigstens ein, dem Adsorptionsfilterabschnitt strömungsmäßig vorgeschalteter Feinfilterabschnitt zur Abscheidung von Verunreinigungen aus der Atemluft, insbesondere zur Abscheidung von Aerosolen, vorgesehen sein. Durch die Kombination von Adsorptionsfilterabschnitt und Feinfilterabschnitt kann zuverlässig auch in stark belasteten Umgebungen eine hohe Qualität der gefilterten Atemluft erzielt werden. In dem Adsorptionsfilterabschnitt werden insbesondere gesundheitsschädliche und/oder unangenehm riechende Gase gebunden; in dem vor oder nach dem Adsorptionsfilterabschnitt angeordneten Feinfilterabschnitt werden feine Stäube und Aerosole aus der Atemluft entfernt. Der Feinfilterabschnitt ist bevorzugt vor dem Adsorptionsfilterabschnitt angeordnet.

In einer Ausführungsform kann als Feinfilterabschnitt ein ungefaltetes Filtermedium, insbesondere ein ringförmig ausgebildetes oder gestapeltes Filtermedium, verwendet werden. In einer anderen Ausführungsform kann ein zickzackförmig gefaltetes Filtermedium, insbesondere ein sterngefaltetes rundes Filtermedium, verwendet werden. Günstig ist ein Filtermedium mit Glasfasern in einer Glasfaserlage, insbesondere in einer Glasfaserverbundlage, ein Filtermedium aus Zellulose oder ein Meltblown- oder Spunbond-Vlies oder eine gemischte oder mehrlagige Kombination davon. Ein ungefaltetes Filtermedium kann als flache Lage aus Filtermedium ausgebildet sein und beispielsweise ringförmig ausgebildet oder in mehreren Lagen zu einem Filterstapel geschichtet werden. Hierbei kann beispielsweise ein Glasfaservlies oder Glasfaserpapier verwendet werden. Dieses weist bevorzugt eine einseitig oder beidseitig kaschierte Deckschicht aus einem Spinnvlies auf. Dadurch wird insbesondere ein mechanischer Schutz des oft sehr empfindlichen Glasfasermediums erreicht. Dies ist insbesondere von Vorteil, wenn die Glasfaserlage gefaltet wird, da hierdurch insbesondere das Medium vor Beschädigungen beim Falten geschützt werden kann, welche zu lokalen Undichtigkeiten oder zu Rissen führen könnten. Ferner können derartige Deckschichten zur Verbesserung der mechanischen Festigkeit des Feinfilterabschnitts dienen.

Anstatt von Glasfasern können für den Feinfilterabschnitt auch Kunststofffasern verwendet werden. Insbesondere kann ein synthetisches Medium an Stelle der beschriebenen Glasfasermedien verwendet werden. Als Werkstoff kann dabei beispielsweise Polyester oder Polypropylen oder Polyamid verwendet werden, die Faserlagen sind dabei bevorzugt in Vliesform ausgebildet und beispielsweise im so genannten Elektrospinningverfahren, im Schmelzblasverfahren oder auf sonstige Weise hergestellt. Insbesondere kann in dem Feinfilterabschnitt ein Filtermedium eingesetzt werden, welches in der Filtrationsleistung der Klasse H13 gemäß der Norm EN1822:2009 entspricht.

Ist der Adsorptionsfilterabschnitt als Stapel von Aktivkohleschichten ausgebildet, kann der Feinfilterabschnitt, insbesondere, wenn er als Rundfilter ausgebildet ist, in einem Abstand von dem Adsorptionsfilterabschnitt angeordnet sein. Auf diese Weise kann die durch den Rundfilter radial nach innen in Richtung der Längsachse des Rundfilters gerichtete Strömung der vorgefilterten Luft sich wieder verteilen, so dass die Luft flächig in den Stapel von Aktivkohleschichten über die volle Fläche der ersten Aktivkohleschicht eintreten kann und so den Stapel in Stapelrichtung durchströmen kann.

In einer Ausführungsform kann zusätzlich eine anströmseitige Vorfilterlage, insbesondere zur Grobstaubabscheidung, vorgesehen sein. Diese kann dem Feinfilterabschnitt strömungsmäßig vorgeschaltet sein und auf der Anströmseite der Kartusche angeordnet sein. Dadurch kann auch in stark staubbelasteten Umgebungen eine zuverlässige Funktion des Adsorptionsfilterabschnitts und des Feinfilterabschnitts gesichert und die Staubbeladung der einströmenden Luft reduziert werden.

Das Gehäuse der Kartusche kann aus Kunststoff gefertigt sein, insbesondere mit einem Spritzgussverfahren als Gussschale hergestellt sein. Alternativ ist jedoch auch ein Metallgehäuse, beispielsweise aus Aluminium denkbar.

Gemäß einer vorteilhaften Ausgestaltung kann das Fixierungsmittel in der Aktivkohleschicht ein reaktiver Klebstoff sein, beispielsweise auf Basis von Polyurethan oder Silan. Alternativ kann der Klebstoff in der Aktivkohleschicht ein thermoplastischer Klebstoff sein, beispielsweise auf Basis von Polyolefinen. Erfindungsgemäß wird die lose Aktivkohleschüttung einer konventionellen Kartusche auf diese Weise durch eine fixierte Schüttung als flächiges händelbares adsorbierendes Filtermedium ersetzt. Der große Vorteil dabei ist, dass sich die fixierte Schüttung geometrisch nicht verändern kann, da die Aktivkohlepartikel mit Klebstoff zueinander fixiert sind. Zusätzlich kann an den Oberflächen der Aktivkohleschicht ein begrenzendes Vlies als Trägermedium aufgebracht sein. Eine dergestalt immobilisierte Aktivkohleschicht weist entscheidende Vorteile auf gegenüber einer Schüttung, die durch Bewegungen, Stoß- und Schüttelbewegungen komprimiert wird und deren Durchbruchzeit für zu entfernende, insbesondere für zu adsorbierende, Stoffe dadurch möglicherweise verringert wird. Die Immobilisierung der Aktivkohlepartikel in der Aktivkohleschicht wird durch den Zusatz von Klebstoff erreicht, dessen Kleberfäden an der Oberfläche der Aktivkohlepartikel anhaften und verschiedene Aktivkohlepartikel miteinander verbinden, ohne jedoch die Adsorptionsleistung der Aktivkohle zu beeinträchtigen.

Gemäß einer vorteilhaften Ausgestaltung kann das Trägermedium als Vlies, insbesondere als Filtervlies zur Partikelabscheidung, ausgebildet sein. Das Trägermedium ist Träger der Aktivkohle oder grenzt zumindest an die Aktivkohleschicht an. Das Trägermedium ist beispielsweise als eine Trägerlage bzw. -schicht ausgeführt, die eine mechanische Filtration von partikulären Verunreinigungen des zu reinigenden, gasförmigen Fluids, beispielsweise Luft, übernimmt. In diesem Fall bildet das Trägermedium beispielsweise ein Träger- bzw. Filtervlies, an welchem Schmutzpartikel abgeschieden werden können. Das Vlies kann beispielsweise aus Polyester, Polypropylen, Polyamid, Polyacrylnitril oder Polycarbonat bestehen.

In einer Ausführung des Trägermediums als Trägerschicht bildet die Aktivkohle eine unmittelbar an die Trägerschicht angrenzende Aktivkohleschicht, die vorzugsweise über den Klebstoff mit der Trägerschicht verbunden ist. Hierbei kommt sowohl ein Aufkleben der Aktivkohleschicht auf die Trägerschicht in Betracht als auch die Verklebung über noch nicht abgebundene Klebstofffäden, welche auf die Aktivkohle aufgebracht sind.

Die Trägerschicht begrenzt somit die Aktivkohleschicht zumindest an einer Seite und ist zugleich mit der Aktivkohleschicht verbunden.

Gemäß einer vorteilhaften Ausgestaltung kann der Adsorptionsfilterabschnitt einen Stapel von Aktivkohleschichten mit einer axialen Stapelrichtung umfassen, der in axialer Stapelrichtung durchströmbar ist. Vorteilhaft ermöglicht diese Ausführung eine Ausbildung offener Trägerschicht-Aktivkohleschicht-Lagen mit immobilisierter Aktivkohleschicht. Derartige Lagen, die als Medienlage bezeichnet werden und eine Trägerschicht sowie eine Aktivkohleschicht umfassen, können aufeinandergestapelt werden, wobei die Durchströmungsrichtung in Stapelrichtung, also orthogonal zur Ebene der Lagen liegt. In bevorzugter Ausführung werden jeweils zwei Medienlagen, die jeweils aus einer Trägerschicht und einer Aktivkohleschicht bestehen, in der Weise aufeinandergestapelt, dass die Aktivkohleschichten der beiden Medienlagen unmittelbar aneinandergrenzen; diese zwei Medienlagen bilden zusammen eine Stapeleinheit. Im gestapelten Zustand liegen somit innerhalb einer oberen und einer unteren Trägerschicht zwei verschiedene Aktivkohleschichten unmittelbar aneinander. Derartige Stapeleinheiten können weiter aufeinandergestapelt werden, um eine gewünschte Gesamtdicke der Filtereinrichtung mit einer entsprechenden Filtrationsleistung zu erreichen. Alternativ können die Aktivkohleschichten und Trägerschichten auch jeweils in einer Medienlage, bzw. Stapeleinheit alternierend hintereinander angeordnet sein.

Des Weiteren ist es möglich, in einfacher Weise verschiedene Aktivkohlesorten pro Lage zu kombinieren, beispielsweise verschiedene Rohstoffe wie Kokosnuss, Steinkohle, Holzkohle oder synthetische Ausgangsstoffe, verschiedene Aktivierungsgrade, verschiedene katalytische Eigenschaften und unterschiedliche Imprägnierungen. Weiter können die Aktivkohlesorten sauer oder alkalisch imprägnierte Aktivkohlesorten, insbesondere mit unterschiedlichem Aktivierungsgrad und unter Zusatz verschiedener gebrauchsüblicher Hilfsstoffe wie Adsorbentien und Absorbentien umfassen, die bevorzugt in körniger Schüttung vorliegen können. Hierdurch ist eine Anpassung an das Zielgasspektrum möglich. In einer bevorzugten Ausführungsform werden als Grundstoff für die Aktivkohle lonenaustauscherkügelchen verwendet, die auf Polymerbasis, beispielsweise aus Kunstharzen, insbesondere aus mit Divinylbenzen vernetztem Polystyren hergestellt sind. Insbesondere ist auch möglich, verschiedene Lagen mit jeweils einer bestimmten, jedoch pro Lage unterschiedlichen Aktivkohlesorte zu kombinieren.

In einer vorteilhaften Ausführung kann die Aktivkohleschicht an ihren beiden Seitenflächen von jeweils einer Trägerschicht begrenzt sein; eine zwischenliegende Aktivkohleschicht und zwei Trägerschichten bilden eine Medienlage. Zweckmäßigerweise kann die Aktivkohleschicht auch mit beiden Trägerschichten verklebt sein. Eine Medienlage bzw. Stapeleinheit besteht somit aus zwei Trägerschichten und einer zwischenliegenden Aktivkohleschicht, wobei mehrere Stapeleinheiten aufeinandergestapelt werden können.

Durch eine unterschiedliche Lagenanzahl bzw. Stapeleinheiten können auch große Höhen bei verhältnismäßig geringen Längen und Breiten des Adsorptionsfilterabschnitts verwirklicht werden. Die größere Höhe geht mit längeren Verweilzeiten und einer besseren, effektiven Adsorption einher und führt zu längeren Standzeiten des Aktivkohlefilters.

Zweckmäßig kann die Aktivkohleschicht an ihren Längs- und/oder Breitseiten versiegelt sein, so dass gemeinsam mit den an den Seitenflächen anliegenden Trägerschichten eine allseitige Begrenzung der Aktivkohleschicht realisiert werden kann. Die Versiegelung an den Längs- und/oder Breitseiten erhöht die Stabilität und verbessert die Sicherheit gegen Delaminierung und Verschiebungen in der Aktivkohleschicht. Die Versiegelung der Aktivkohleschicht kann über eine Abdichtung beispielsweise mit einem Seitenband, wie einem Vlies, oder über eine Klebeschicht erfolgen.

Weiter kann das Trägermedium als ein offenporiger Schaum ausgebildet sein, beispielsweise als ein Polyurethanschaum, in welchem die Aktivkohle sowie der Klebstoff aufgenommen sind. Es kommen Ausführungen in Betracht, bei denen zur Herstellung des Adsorptionsfilterabschnitts zunächst der Klebstoff in den offenporigen Schaum des Trägermediums eingebracht und anschließend die Aktivkohle eingebracht wird. Möglich ist auch die Ausführung, zunächst den Klebstoff auf die Aktivkohle aufzubringen und das Aktivkohle-Klebstoff-Gemisch in den offenporigen Schaum des Trägermediums einzubringen.

Gemäß einer vorteilhaften Ausgestaltung kann der Adsorptionsfilterabschnitt einen gewickelten Körper von Aktivkohleschichten umfassen, der radial zu einer Längsachse des Körpers durchströmbar ist. Außer der beschriebenen Stapelform von Aktivkohleschichten kann der Adsorptionsfilterabschnitt als Wickelfilter ausgeführt sein, indem die Aktivkohleschichten beispielsweise auf einen Kern gewickelt werden. Dabei kann der Querschnitt des Kerns rund, oval, oder andersartig geformt sein, so dass der entstehende gewickelte Körper von Aktivkohleschichten entsprechend zylinderförmig, mit ovalem Querschnitt, als Kegelstumpf, Pyramide oder mit anderer Form ausgeführt sein kann. Möglich ist auch, die Aktivkohleschichten in Form einzelner geschlossener Hohlzylinder mit verschiedenem Durchmesser geschachtelt ineinander zu setzen, um so eine zylinderförmige oder hohlzylinderförmige Gestalt des Adsorptionsfilterabschnitts zu erhalten.

Gemäß einer vorteilhaften Ausgestaltung kann der Feinfilterabschnitt einen Filterstapel aufweisen, der in Filterstapelrichtung durchströmbar und einseitig vor dem Adsorptionsfilterabschnitt angeordnet ist. Der Feinfilterabschnitt, der als Partikelfilter ausgeführt sein kann, kann mehrstufig ausgeführt sein. Insbesondere können dabei beispielsweise mehrere Lagen mit unterschiedlicher Porosität als Gradientenfilter angeordnet sein. Prinzipiell ist jedoch auch denkbar, dass der Feinfilterabschnitt hinter, also stromabwärts des Adsorptionsfilterabschnitts oder auch sowohl vor, also stromaufwärts, als auch stromabwärts des Adsorptionsfilterabschnitts angeordnet sein kann.

Als Feinfilterabschnitt kann in einer Ausführungsform ein ungefaltetes Filtermedium, insbesondere ein einlagiges, ringförmig ausgebildetes, oder gestapeltes Filtermedium, verwendet werden. In einer anderen Ausführungsform kann ein zickzackförmig gefaltetes Filtermedium, insbesondere ein sterngefaltetes rundes Filtermedium, verwendet werden. Günstig ist ein Filtermedium beispielsweise aus Zellulose, Kunststoffschaum oder Vlies. Vorteilhaft kann der Feinfilterabschnitt eine einlagige oder mehrlagige Kombination aus Lagen derartiger Filtermedien umfassen. Wie bei dem Adsorptionsfilterabschnitt beschrieben, kann der Feinfilterabschnitt in ungefalteter Form als Hohlzylinder ausgebildet sein, der einlagig ringförmig ausgebildet sein kann oder aber aus einzelnen, ineinander geschachtelt angeordneten Hohlzylindern zusammengesetzt sein kann. Ein mehrlagiger Feinfilterabschnitt kann insbesondere als Gradientenfilter mit einzelnen Lagen beispielsweise unterschiedlicher Porosität ausgebildet sein.

Durch die Verwendung des Feinfilterabschnitts kann erreicht werden, dass der Adsorptionsfilterabschnitt vor zu großer Staubbeladung und Aerosolen geschützt wird. Dadurch wird dessen Funktion der Gasabscheidung auch bei sehr staubbeladener und/oder aerosolbeladener Ansaugluft in möglichst geringem Maße beeinträchtigt.

Soll die Kartusche in einer sehr stark staubbeladener Umgebung eingesetzt werden, so ist denkbar, strömungsmäßig vor dem Feinfilterabschnitt noch einen Grobstaubabscheider anzuordnen, damit sich der Feinfilterabschnitt nicht so schnell mit abgeschiedenem Staub zusetzt und so die Standzeit der Kartusche verlängert wird.

Es können jeweils zwei Medienlagen in der Weise aufeinandergeschichtet sein, dass die Aktivkohleschichten einander zugewandt sind. Damit ergibt sich eine Stapeleinheit aus zwei Medienlagen, die von einer Trägerschicht und einem Feinfilterabschnitt begrenzt wird, zwischen denen zwei unmittelbar aneinandergrenzende Aktivkohleschichten angeordnet sind.

Gemäß einer vorteilhaften Ausgestaltung kann der Feinfilterabschnitt einen Rundfilter aufweisen, der radial zu einer Längsachse des Rundfilters durchströmbar ist. Ein solcher Rundfilter hat den Vorteil, dass die Anströmung des Rundfilters radial erfolgen kann und somit die Ansaugluft der Kartusche von der radialen Außenseite erfolgen kann und nicht von der axialen Unterseite der Kartusche erfolgen muss. Dadurch lässt sich eine solche Kartusche konstruktiv kompakt gestalten.

Gemäß einer vorteilhaften Ausgestaltung kann der Feinfilterabschnitt einen Rundfilter aufweisen, der den Adsorptionsfilterabschnitt umgibt. Zweckmäßig kann der Feinfilterabschnitt als Rundfilter auch radial außerhalb des Adsorptionsfilterabschnitts angeordnet sein, wodurch eine noch kompaktere Bauform der Kartusche ermöglicht wird. Eine solche Anordnung ist sowohl für eine Stapelanordnung von Aktivkohleschichten, die axial durchströmbar sind, als auch für gewickelte Körper von Aktivkohleschichten, die radial durchströmbar sind, denkbar. Bei der axial durchströmbaren Stapelanordnung kann der Luftstrom, der den Feinfilterabschnitt radial durchströmt hat, umgelenkt werden, so dass der Luftstrom den Adsorptionsfilterabschnitt anschließend axial durchströmen kann. Diese Anordnung bietet den Vorteil einer vergleichsweise großen Anström- und Filtermedienfläche des Feinfilterabschnittes, der so auf vergleichsweise geringen Druckverlust und eine hohe Staubkapazität ausgelegt werden kann. Insbesondere die Auslegung auf einen geringen Druckverlust ist bei Atemschutzfiltern für die durch den Filter geschützte Person von Vorteil, da dadurch das Atmen leichter fällt.

Gemäß einer vorteilhaften Ausgestaltung kann der Rundfilter und/oder der Adsorptionsfilterabschnitt mehrlagig ausgebildet sein. Eine mehrlagige Bauform des Feinfilterabschnitts als Rundfilter ist besonders bei einer flachen Filterlage wie beispielsweise einem Vlies vorteilhaft, insbesondere wenn verschiedene Vlieslagen als mehrstufiger Feinfilterabschnitt mit unterschiedlicher Porosität verwendet werden.

Gemäß einer vorteilhaften Ausgestaltung kann der Rundfilter gefaltet ausgebildet sein. Ein beispielsweise zickzackförmig gefalteter Rundfilter als alternative Ausführung eines Feinfilterabschnitts ist vorteilhaft, da der gefaltete Rundfilter eine große Filteroberfläche bei günstigem Bauraumbedarf aufweist. Auch sind gefaltete Filtermedien in der Luftfiltertechnik sehr verbreitet und daher kostengünstig herzustellen und zu beziehen.

In einer Ausführungsform kann beispielsweise als Feinfilterabschnitt ein ungefaltetes Filtermedium, insbesondere ein einlagiges ringförmig ausgebildetes oder gestapeltes Filtermedium, verwendet werden. In einer weiteren Ausführungsform kann ein zickzackförmig gefaltetes Filtermedium, insbesondere ein sterngefaltetes rundes Filtermedium, verwendet werden. Günstig ist ein Filtermedium mit Glasfasern in einer Glasfaserlage. Hierbei kann beispielsweise ein Glasfaservlies oder Glasfaserpapier verwendet werden. Dieses weist bevorzugt eine einseitig oder beidseitig kaschierte Deckschicht aus einem Spinnvlies auf. Dadurch wird insbesondere ein mechanischer Schutz des oft sehr empfindlichen Glasfasermediums erreicht. Dies ist insbesondere von Vorteil, wenn die Glasfaserlage gefaltet wird, da hierdurch insbesondere das Medium vor Beschädigungen beim Falten geschützt werden kann, welche zu lokalen Undichtigkeiten oder zu Rissen führen könnten. Ferner können derartige Deckschichten zur Verbesserung der mechanischen Festigkeit des Feinfilterabschnitts dienen.

Gemäß einer vorteilhaften Ausgestaltung kann das Gehäuse bezogen auf eine Gehäuselängsachse einen radialen Lufteintritt aufweisen. Ein radialer Lufteintritt ist besonders vorteilhaft bei der Verwendung eines Feinfilterabschnitts mit radialer Durchströmung, der in Kombination mit einem Adsorptionsfilterabschnitt mit axialer oder radialer Durchströmung angeordnet sein kann. Bei einem Adsorptionsfilterabschnitt mit radialer Durchströmung, bei dem der Feinfilterabschnitt auch noch radial den Adsorptionsfilterabschnitt umgibt, ergeben sich so möglichst kurze Strömungswege für die zu filternde Luft und damit auch ein möglichst geringer Strömungswiderstand, verursacht durch die Strömungsführung in der Kartusche.

Gemäß einer vorteilhaften Ausgestaltung kann das Gehäuse bezogen auf eine Gehäuselängsachse einen axialen Lufteintritt aufweisen. Alternativ zu einem radialen Lufteintritt bietet sich ein axialer Lufteintritt auch bei einem Feinfilterabschnitt mit radialer Durchströmung besonders an, da das Gehäuse einfach als Glocke ohne Gehäuseboden ausgeführt sein kann, in welches der Adsorptionsfilterabschnitt mit integriertem oder separat angeordnetem Feinfilterabschnitt günstig zu montieren ist, und so die beiden Filterabschnitte bei Bedarf auch leicht zu wechseln sind. Das Gehäuse selbst ist, da keine zusätzlichen Einlassöffnungen vorzusehen sind, kostengünstig zu fertigen.

Erfindugsgemäß ist ein durchströmbares Verbindungselement zum Befestigen des Gehäuses an der Atemschutzmaske vorgesehen, wobei das Verbindungselement mit seinem Strömungskanal an einer Reinluftseite des Adsorptionsfilterabschnitts angeordnet ist. Das Verbindungselement dient dazu, die Kartusche lösbar und dabei fluiddicht mit der Atemschutzmaske zu verbinden. Dazu weist das Verbindungselement einen Strömungskanal auf, der die gefilterte Luft von der Reinluftseite des Adsorptionsfilterabschnitts in die Atemschutzmaske leitet. Als Verbindungselement wird bei Atemschutzmasken an der Kartusche üblicherweise ein Stutzen mit einem Außengewinde verwendet, der in ein Gegenelement an der Atemschutzmaske mit einem Innengewinde geführt wird und damit eine fluiddichte Verbindung zwischen Reinluftseite der Kartusche und dem Innenraum der Atemschutzmaske herstellt. Alternativ zu dem Gewinde ist jedoch auch eine Bajonettverbindung vorstellbar.

Gemäß einer vorteilhaften Ausgestaltung kann der Adsorptionsfilterabschnitt einen gewickelten Körper von Aktivkohleschichten umfassen, der radial zu einer Längsachse des Körpers durchströmbar ist, mit einer geschlossenen Endplatte und einer offenen Endplatte, wobei das Verbindungselement einen Stutzen aufweist, der mit der offenen Endplatte verbunden ist. Die Endplatten können beispielsweise als dichtende Klebeschichten ausgebildet sein. Der Stutzen kann eine von der Kartusche in axialer Richtung weg weisende Stirnseite aufweisen, die als Dichtfläche zum Abdichten beim Verbinden mit einem Gegenelement einer Atemschutzmaske dient.

Das Verbindungselement kann dabei zweckmäßig direkt mit dem Adsorptionsfilterabschnitt verbunden sein, so dass die Reinluftseite des Adsorptionsfilterabschnitts direkt mit dem Strömungskanal des Stutzens verbunden ist. Dazu ist der Stutzen bevorzugt in die offene Endplatte des gewickelten Körpers fluiddicht montiert, während die gegenüber liegende Seite des gewickelten Körpers eine geschlossene Endplatte aufweist. Der Stutzen kann insbesondere über eine Schnappverbindung mit der offenen Endplatte verbunden sein. Dadurch verläuft der Strömungspfad der zu filternden Luft von einer radialen Außenseite des Körpers radial nach innen und kann beispielsweise durch den hohlen Kern des Körpers direkt in den Strömungskanal des Stutzens geführt werden. Dadurch ergibt sich ein Adsorptionsfilterabschnitt mit einem fest montierten Stutzen, der sich direkt mit einem Gegenelement einer Atemschutzmaske verbinden lässt.

Gemäß einer vorteilhaften Ausgestaltung kann der Adsorptionsfilterabschnitt einen Stapel von Aktivkohleschichten mit einer axialen Stapelrichtung umfassen, der in axialer Stapelrichtung durchströmbar ist, wobei das Verbindungselement an einem reinluftseitigen Deckel des Stapels angeordnet ist. Auch an einem Adsorptionsfilterabschnitt aus einem Stapel von Aktivkohleschichten, die axial durchströmbar sind, kann ein Stutzen als Verbindungselement zweckmäßig angeordnet werden, wenn über dem Stapel von Aktivkohleschichten ein reinluftseitiger Deckel angebracht wird, welcher den Stapel fluiddicht abschließt, so dass die gefilterte Luft auf der Reinluftseite gesammelt wird und nur durch den Stutzen abströmen kann.

Erfindugsgemäß weist das Gehäuse einen Gehäusemantel auf, der mit dem Verbindungselement lösbar verbindbar ist. Als Verbindungsmittel zwischen Gehäusemantel und Verbindungselement kann beispielsweise eine Schnapp- oder Rastanordnung oder auch ein Gewinde vorgesehen sein. Ist das Verbindungselement beispielsweise in Form eines Stutzens fluiddicht direkt mit dem Adsorptionsfilterabschnitt verbunden, kann zweckmäßigerweise der Gehäusemantel des Gehäuses der Kartusche lösbar mit dem Verbindungselement verbunden werden. Dadurch ist es möglich, den Adsorptionsfilterabschnitt mit dem daran angeordneten Feinfilterabschnitt aus dem Gehäuse zu lösen und beispielsweise nach Beladung mit Staub und/oder Erschöpfung des Adsorptionsvermögens des Adsorptionsfilterabschnitts auszutauschen. Der Gehäusemantel, der so insbesondere werkzeugfrei abnehmbar ausgebildet sein kann, kann auf diese Weise wiederverwendet werden, wodurch sich eine Kartusche besonders kostengünstig darstellen lässt.

Gemäß einer vorteilhaften Ausgestaltung können Mittel vorgesehen sein, die eine Wiederverwendung einer gebrauchten Kartusche unterbinden. Soll verhindert werden, dass eine bereits gebrauchte Kartusche wiederverwendet wird und so möglicherweise die zulässige Standzeit der Kartusche überschritten wird, so können an dem Verbindungselement Mittel vorgesehen sein, welche verhindern, dass eine bereits gebrauchte Kartusche nochmals an eine Atemschutzmaske angeschraubt werden kann. Dies kann beispielsweise in Form einer Lasche geschehen, die an dem Gewinde des Stutzens des Verbindungselement so angeordnet ist, dass sie bei Entfernen der Kartusche von der Atemschutzmaske so abgerissen und/oder verformt wird, dass sie einem Wiederanschrauben der Kartusche an eine Atemschutzmaske als mechanisches Hindernis entgegensteht, indem sie beispielsweise die Gewindeverbindung zwischen Kartusche und Gegenelement der Atemschutzmaske blockiert. Alternativ ist auch denkbar, an der Verbindung zwischen Gehäusemantel und Verbindungselement der Kartusche ein Verbindungsmittel wie eine Lasche oder ein Schnappelement mit einer Sollbruchstelle vorzusehen, welches bei einem Entfernen des Gehäusemantels zerstört wird und so ein Wiederverwenden der gebrauchten Kartusche verhindert.

Nach einem weiteren Aspekt betrifft die Erfindung eine Atemschutzmaske mit einer Kartusche, wobei die Atemschutzmaske ein durchströmbares Gegenelement für ein durchströmbares Verbindungselement der Kartusche umfasst. Eine solche Atemschutzmaske kann vorteilhaft mit der erfindungsgemäßen Kartusche verwendet werden, da die Kartusche einen in einem Gehäuse angeordneten Adsorptionsfilterabschnitt und wenigstens einen, dem Adsorptionsfilterabschnitt strömungsmäßig vorgeschalteten Feinfilterabschnitt zur Abscheidung von Verunreinigungen aus der Atemluft, insbesondere zur Abscheidung von Aerosolen, vorsieht. Dabei weist der Adsorptionsfilterabschnitt der Kartusche ein Trägermedium und eine Aktivkohleschicht auf, in der Aktivkohlepartikel durch Zusatz eines Fixierungsmittels immobilisiert sind. Bei der erfindungsgemäßen Ausführung ist durch die Immobilisierung der Aktivkohlepartikel die Luftdurchlässigkeit höher als bei losen Schüttungen mit Aktivkohlepartikeln vergleichbaren Korndurchmessers. Die Immobilisierung der Aktivkohlepartikel hat des Weiteren den Vorteil, dass verschiedenartige Geometrien der Filtereinrichtung bzw. der Lagen des Trägermediums und der Aktivkohle erzeugt werden können. In Betracht kommen sowohl runde, ovale, rechteckige als auch beliebige andere Zuschnitte. Verbindungselement und Gegenelement können beispielsweise mit Gewinde und Gegengewinde oder mit einer Bajonettverbindung ausgestaltet sein, um eine einfache und schnelle Verbindung zwischen Kartusche und Atemschutzmaske herstellen zu können.

Gemäß einer vorteilhaften Ausgestaltung kann ein Absperrelement vorgesehen sein, welches bei entfernter Kartusche das Gegenelement fluiddicht abschließt. Mit Hilfe eines Absperrelements, das beispielsweise in Form einer Ventilmembran, beispielswiese als Elastomer, ausgeführt sein kann, kann verhindert werden, dass bei einem Wechsel der Kartusche bei aufgesetzter Atemschutzmaske, beispielsweise, weil die Standzeit der Kartusche überschritten ist oder weil auf Grund hoher Beladung mit Staubpartikeln der Strömungswiderstand der angesaugten Luft zu groß geworden ist, bei abgenommener Kartusche Luft mit möglicherweise gefährdenden Stoffen in die Atemschutzmaske gelangen und so eingeatmet werden kann. Ein solches Absperrelement kann sinnvollerweise direkt strömungsmäßig hinter dem Gewinde/Bajonett des Gegenelements angeordnet sein.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

**Es zeigen beispielhaft:**
- Fig. 1: als einen Längsschnitt eine Kartusche nach einem ersten Ausführungsbeispiel der Erfindung mit einem Stapel von Aktivkohleschichten als Adsorptionsfilterabschnitt und einem sternförmig gefalteten Rundfilter als Feinfilterabschnitt mit radialem Lufteintritt;
- Fig. 2: als einen Längsschnitt eine Kartusche nach einem weiteren Ausführungsbeispiel der Erfindung mit einem Stapel von Aktivkohleschichten als Adsorptionsfilterabschnitt und einem ungefalteten, als Filterstapel gestalteten Feinfilterabschnitt mit axialem Lufteintritt;
- Fig. 3: als eine geschnittene isometrische Darstellung eine Kartusche nach einem weiteren Ausführungsbeispiel der Erfindung mit einem gewickelten Körper aus Aktivkohleschichten als Adsorptionsfilterabschnitt und einem den Adsorptionsfilterabschnitt umgebenden sternförmig gefalteten Rundfilter als Feinfilterabschnitt mit radialem Lufteintritt;
- Fig. 4: als eine geschnittene isometrische Darstellung einen Adsorptionsfilterabschnitt als gewickelten Körper und einen den Adsorptionsfilterabschnitt umgebenden sternförmig gefalteten Rundfilter als Feinfilterabschnitt;
- Fig. 5: als eine geschnittene isometrische Darstellung einen Adsorptionsfilterabschnitt als gewickelten Körper und einen den Adsorptionsfilterabschnitt umgebenden mehrlagig schichtförmigen Rundfilter als Feinfilterabschnitt;
- Fig. 6: in isometrischer Darstellung eine Kartusche mit einem Adsorptionsfilterabschnitt als gewickelten Körper und einem den Adsorptionsfilterabschnitt umgebenden sternförmig gefalteten Rundfilter als Feinfilterabschnitt;
- Fig. 7: als eine teilgeschnittene Seitenansicht eine Kartusche mit einem Adsorptionsfilterabschnitt als gewickelten Körper und einem den Adsorptionsfilterabschnitt umgebenden sternförmig gefalteten Rundfilter als Feinfilterabschnitt;
- Fig. 8: als eine isometrische Darstellung eine Kartusche nach einem Ausführungsbeispiel der Erfindung mit axialem Lufteintritt;
- Fig. 9: als eine geschnittene isometrische Darstellung eine Kartusche nach einem weiteren Ausführungsbeispiel der Erfindung mit einem gewickelten Körper aus Aktivkohleschichten als Adsorptionsfilterabschnitt und einem den Adsorptionsfilterabschnitt umgebenden gefalteten Rundfilter als Feinfilterabschnitt mit axialem Lufteintritt;
- Fig. 10: als eine geschnittene isometrische Darstellung eine Kartusche nach einem weiteren Ausführungsbeispiel der Erfindung mit einem gewickelten Körper aus Aktivkohleschichten als Adsorptionsfilterabschnitt und einem den Adsorptionsfilterabschnitt umgebenden mehrlagig schichtförmigen Rundfilter als Feinfilterabschnitt mit axialem Lufteintritt;
- Fig. 11: als eine geschnittene isometrische Darstellung eine Kartusche nach einem weiteren Ausführungsbeispiel der Erfindung mit einem gewickelten Körper aus Aktivkohleschichten als Adsorptionsfilterabschnitt und einem den Adsorptionsfilterabschnitt umgebenden sternförmig gefalteten Rundfilter als Feinfilterabschnitt mit abgehobenem Gehäusemantel;
- Fig. 12: als eine geschnittene isometrische Darstellung ähnlich einer Kartusche mit mehrlagigem Rundfilter als Feinfilterabschnitt mit aufgesetztem Gehäusemantel;
- Fig. 13: als eine teilgeschnittene Seitenansicht einen Adsorptionsfilterabschnitt aus einem Stapel von Aktivkohleschichten mit einem an einem reinluftseitigen Deckel angeordneten Verbindungselement; und
- Fig. 14: in schematischer Darstellung eine Atemschutzmaske nach einem Ausführungsbeispiel der Erfindung mit einer montierten Kartusche.

### Ausführungsformen der Erfindung und nützliche Beispiele

In den Figuren sind gleiche oder gleichartige Komponenten mit gleichen Bezugszeichen beziffert. Die Figuren zeigen lediglich Beispiele und sind nicht beschränkend zu verstehen.

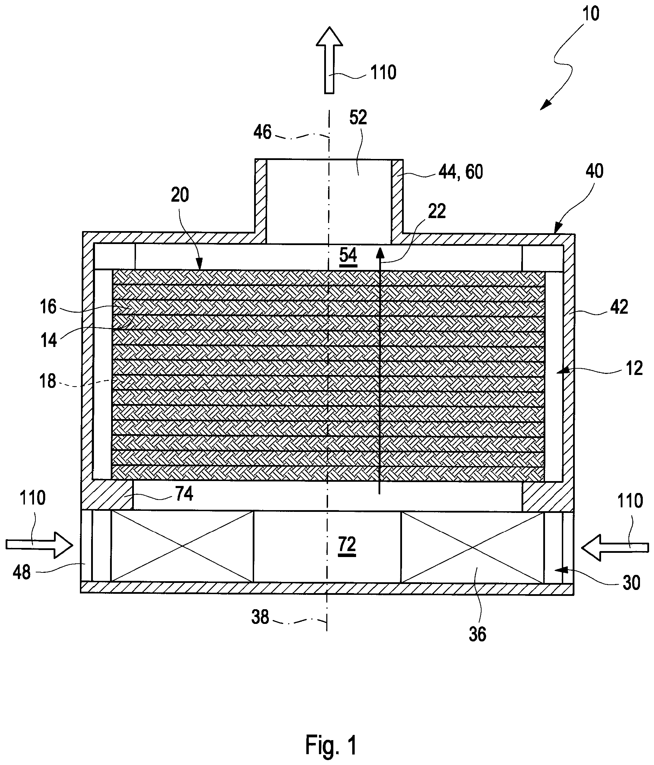

Figur 1 zeigt als einen Längsschnitt eine Kartusche 10 nach einem ersten nicht erfindungsgemäßen Beispiel mit einem Stapel 20 von Aktivkohleschichten 16 als Adsorptionsfilterabschnitt 12 und einem sternförmig gefalteten Rundfilter 36 als Feinfilterabschnitt 30 mit radialem Lufteintritt 48. Die Kartusche 10 für eine Atemschutzmaske 100, weist den in einem Gehäuse 40 angeordneten Adsorptionsfilterabschnitt 12 und den, dem Adsorptionsfilterabschnitt 12 strömungsmäßig vorgeschalteten Feinfilterabschnitt 30 zur Abscheidung von Verunreinigungen aus der Atemluft, insbesondere zur Abscheidung von Aerosolen, auf. Der Adsorptionsfilterabschnitt 12 weist den Stapel 20 von jeweils alternativ aufeinander folgenden Trägermedien 14 und Aktivkohleschichten 16 auf, in denen Aktivkohlepartikel durch Zusatz eines Fixierungsmittels 18 immobilisiert sind. Das Fixierungsmittel 18 in der Aktivkohleschicht 16 kann ein reaktiver Klebstoff sein, beispielsweise auf Basis von Polyurethan oder Silan, oder ein thermoplastischer Klebstoff, beispielsweise auf Basis von Polyolefinen. Das Trägermedium 14 kann beispielsweise als Filtervlies zur Partikelabscheidung ausgebildet sein.

Der Adsorptionsfilterabschnitt 12 umfasst den Stapel 20 von Aktivkohleschichten 16 mit einer axialen Stapelrichtung 22, der in axialer Stapelrichtung 22 durchströmbar ist. Der Feinfilterabschnitt 30 weist den Rundfilter 36 auf, der radial zu der Längsachse 38 des Rundfilters 36 durchströmbar ist.

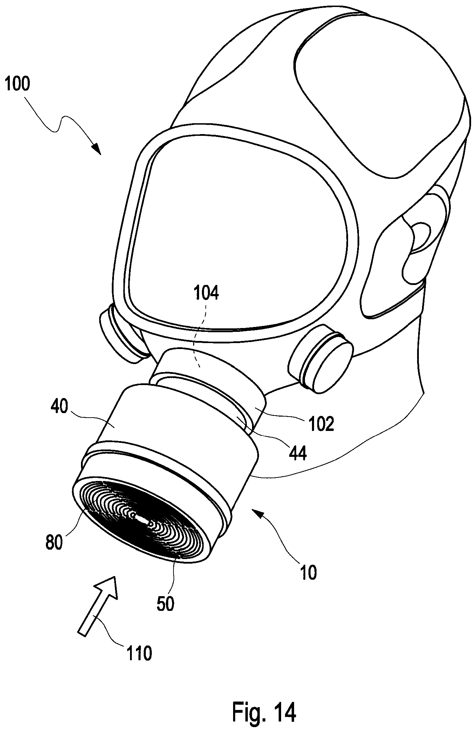

Es ist ein durchströmbares Verbindungselement 44 in Form eines Stutzens 60 zum Befestigen des Gehäuses 40 der Kartusche 10 an einer (in Figur 14 dargestellten) Atemschutzmaske 100 vorgesehen. Das Verbindungselement 44 ist mit seinem Strömungskanal 52 an der Reinluftseite 54 des Adsorptionsfilterabschnitts 12 angeordnet.

Das Gehäuse 40 weist, bezogen auf die Gehäuselängsachse 46, einen radialen Lufteintritt 48 auf. Die zu filternde Luft strömt in Strömungsrichtung 110 durch den radialen Lufteintritt 48, der beispielsweise als Lochraster im Gehäusemantel 42 ausgebildet sein kann, in das Gehäuse 40 und radial durch den Feinfilterabschnitt 30 in den Innenraum 72 des Gehäuses 40. Danach tritt die vorgefilterte Luft axial in Stapelrichtung 22 des Adsorptionsfilterabschnitts 12 hindurch in den Reinluftbereich 54 des Gehäuses 40. Von dort tritt die gefilterte Reinluft durch den Strömungskanal 52 des Stutzens 60 in Strömungsrichtung 110 entlang der Gehäuselängsachse 46 aus der Kartusche in die, nicht eingezeichnete, Atemschutzmaske 100. Der Adsorptionsfilterabschnitt 12 ist in dem Gehäusemantel 42 mittels einer geeigneten rundum laufenden Lagerung 74 gehalten und so abgedichtet, dass die zu filternde Luft durch den Stapel 20 an Aktivkohleschichten 16 strömt und nicht an der Außenseite des Adsorptionsfilterabschnitts 12 vorbei in den Reinluftbereich 54 gelangen kann.

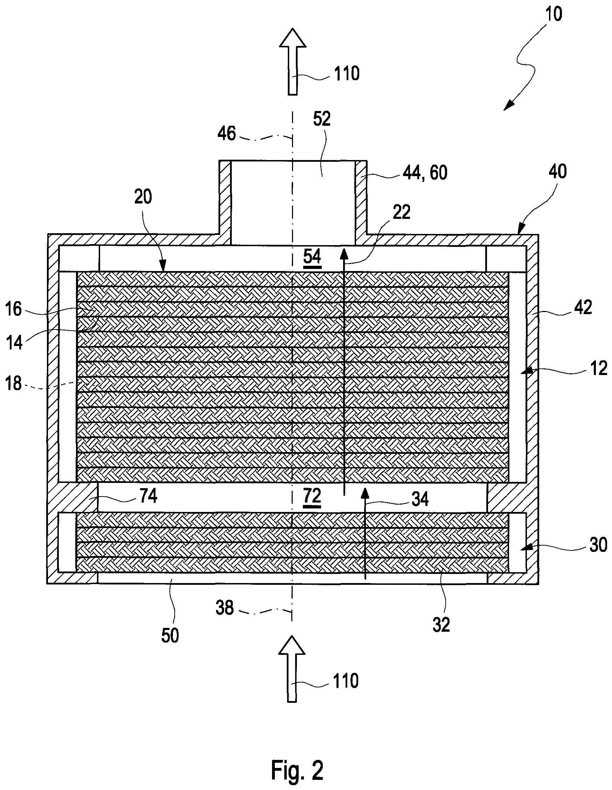

In Figur 2 ist als Längsschnitt eine Kartusche 10 nach einem weiteren nicht erfindungsgemäßen Beispiel mit einem Stapel 20 von Aktivkohleschichten 16 als Adsorptionsfilterabschnitt 12 und einem Filterstapel 32 als Feinfilterabschnitt 30 mit axialem Lufteintritt 50 dargestellt. Der Filterstapel 32 stellt einen mehrlagigen Aufbau des Feinfilterabschnitts 30 beispielsweise in Form eines mehrstufigen Gradientenfilters dar, wobei die einzelnen Lagen Feinfiltermedien mit unterschiedlicher Porosität aufweisen können. Der Filterstapel 32 ist in Filterstapelrichtung 34 durchströmbar und einseitig vor dem Adsorptionsfilterabschnitt 12 angeordnet. Das Gehäuse 40 weist bezogen auf die Gehäuselängsachse 46 einen axialen Lufteintritt 50 auf. Die zu filternde Luft tritt durch den nach unten offenen axialen Lufteinlass 50 des Gehäusemantels 42 in axialer Filterstapelrichtung 34 in das Gehäuse 40 ein und strömt durch den Filterstapel 32 als Feinfilterabschnitt 30 axial hindurch. Danach tritt die vorgefilterte Luft in den Innenraum 72 des Gehäuses 40, um von dort in Stapelrichtung 22 den Adsorptionsfilterabschnitt 12 wie bei dem Ausführungsbeispiel in Figur 1 in Richtung des Reinluftbereichs 54 und damit zum Strömungskanal 54 des Verbindungselements 44 zu strömen. Von dort tritt die gefilterte Reinluft durch den Strömungskanal 52 des Stutzens 60 in Strömungsrichtung 110 entlang der Gehäuselängsachse 46 aus der Kartusche aus in die, nicht eingezeichnete, Atemschutzmaske 100.

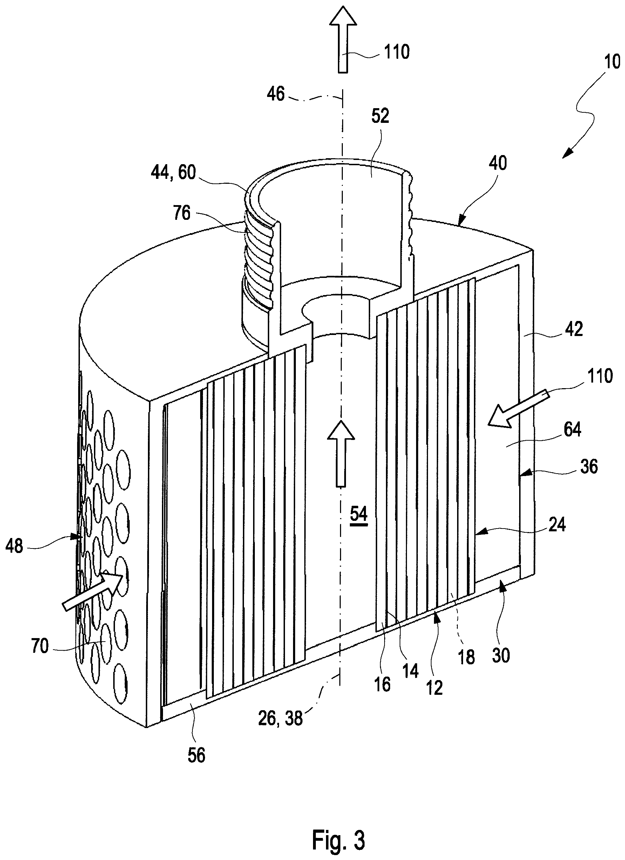

Figur 3 zeigt als eine geschnittene isometrische Darstellung eine Kartusche 10 nach einem weiteren nicht erfindungsgemäßen Beispiel mit einem gewickelten Körper 24 aus Aktivkohleschichten 16 als Adsorptionsfilterabschnitt 12 und einem den Adsorptionsfilterabschnitt 12 umgebenden sternförmig gefalteten Rundfilter 36 als Feinfilterabschnitt 30 mit radialem Lufteintritt 48. Der Adsorptionsfilterabschnitt 12 umfasst dabei den gewickelten Körper 24 von Aktivkohleschichten 16, der radial zu der Längsachse 26 des Körpers 24 durchströmbar ist. Der Feinfilterabschnitt 30 weist den Rundfilter 36 auf, der den Adsorptionsfilterabschnitt 12 umgibt. Der gewickelte Körper 24 des Adsorptionsfilterabschnitts 12 und der Rundfilter 36 des Feinfilterabschnitts 30 sind dabei mit ihren Längsachsen 26, bzw. 38 koaxial zur Gehäuselängsachse 46 angeordnet.

Der Rundfilter 36 ist bei dem Ausführungsbeispiel in Figur 3 mit einer Zickzackfaltung gefaltet ausgebildet. Im Schnitt ist auf beiden Seiten je eine Falte 64 angeschnitten zu erkennen. Adsorptionsfilterabschnitt 12 und Rundfilter 36 weisen eine gemeinsame geschlossene Endplatte 56 auf, mit welcher das Gehäuse 40 gegen die Umgebung am Boden abgedichtet ist.

Die zu filternde Luft tritt bei der Kartusche 10 in Figur 3 in einem radialen Lufteinlass 48 durch die radialen Einlassöffnungen 70 ein und strömt durch den Feinfilterabschnitt 30 in Strömungsrichtung 110 direkt in radialer Richtung weiter durch den Adsorptionsfilterabschnitt 12 in den freien Kern des gewickelten Körpers 24 des Adsorptionsfilterabschnitts 12, der den Reinluftbereich 54 darstellt. Von dort strömt die gefilterte Reinluft entlang der Gehäuselängsachse 46 durch den Strömungskanal 52 des Stutzens 60 des Verbindungselements 44.

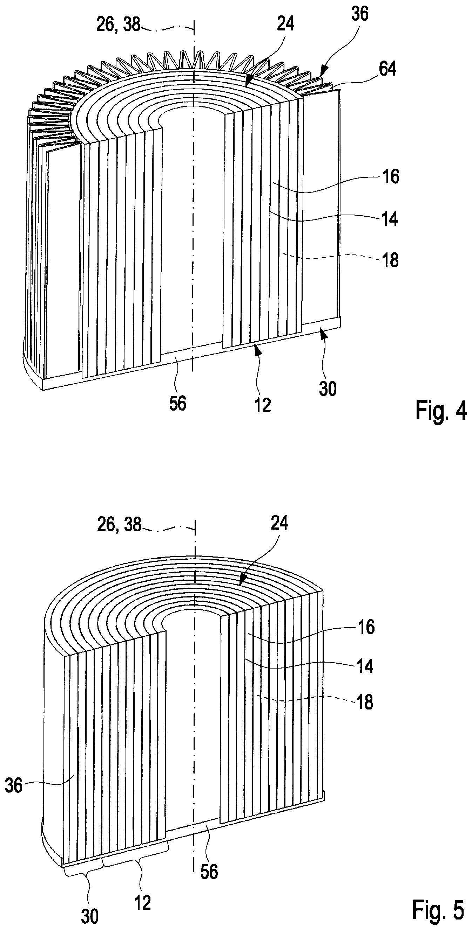

Figur 4 zeigt dazu in geschnittener isometrischer Darstellung einen Adsorptionsfilterabschnitt 12 als gewickelten Körper 24 und einen den Adsorptionsfilterabschnitt 12 umgebenden sternförmig gefalteten Rundfilter 36 als Feinfilterabschnitt 30. Die Aktivkohleschichten 16, in denen Aktivkohlepartikel mittels eines Fixierungsmittels 18, beispielsweise eines Klebstoffs, immobilisiert eingelagert sind, sind durch Trägermedien 14 getrennt auf einen Kern aufgewickelt, der nach dem Wickelvorgang entfernt wurde. So bildet der gewickelte Körper 24 insgesamt einen Hohlzylinder. Alternativ könnten die Aktivkohleschichten 16 auch jeweils als einzelne Hohlzylinder mit verschiedenen Durchmessern ausgebildet sein, und auf eine gemeinsame Längsachse 26 geschachtelt ineinander gesetzt werden. Auch dadurch lässt sich eine radiale Durchströmung des Adsorptionsfilterabschnitts 12 darstellen. Außen auf den gewickelten Körper 24 ist der Rundfilter 36 des Feinfilterabschnitts 30 aufgebracht, der mit seiner Längsachse 38 mit der Längsachse 26 des Adsorptionsfilterabschnitts 12 koaxial angeordnet ist. Der Rundkörper 36 ist als gefalteter Filterbalg ausgeführt, dessen Falten 64 radial nach außen abstehen.

Figur 5 zeigt als Alternative zu der in Figur 4 dargestellten Ausführungsform einen Adsorptionsfilterabschnitt 12 als gewickelten Körper 24 und einen den Adsorptionsfilterabschnitt 12 umgebenden mehrlagig schichtförmigen Rundfilter 36 als Feinfilterabschnitt 30. Bei diesem Ausführungsbeispiel ist der Feinfilterabschnitt 30 ebenfalls schichtförmig aufgebaut, wobei die verschiedenen Lagen beispielsweise in Form eines mehrstufigen Gradientenfilters mit unterschiedlicher Porosität realisiert sein können. So kann der Feinfilterabschnitt 30 als Hohlzylinder mit einem geringfügig größeren Innendurchmesser als der Außendurchmesser des Adsorptionsfilterabschnitts 12 ausgebildet sein, der dann auf den Adsorptionsfilterabschnitt 12 aufgeschoben werden kann. Der Rundfilter 36 kann beispielsweise in Form einzelner hohlzylinderförmiger Hülsen ausgebildet sein, die jeweils verschiedene Durchmesser haben, so dass sie ebenfalls zu einem gemeinsamen Hohlzylinder geschachtelt aufeinander geschoben werden können.

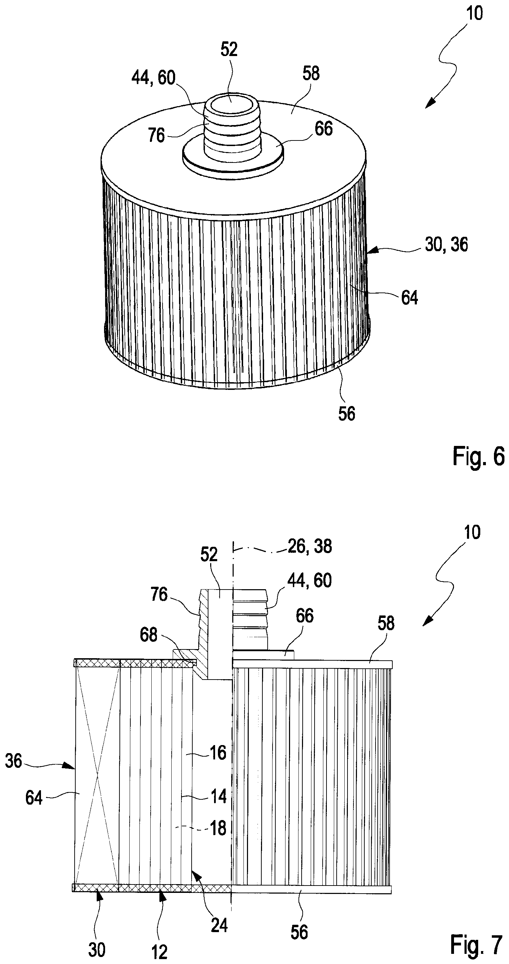

In Figur 6 ist in isometrischer Darstellung eine Kartusche 10 mit einem Adsorptionsfilterabschnitt 12 als gewickelten Körper 24 und einem den Adsorptionsfilterabschnitt 12 umgebenden sternförmig gefalteten Rundfilter 36 als Feinfilterabschnitt 30 dargestellt. Der Adsorptionsfilterabschnitt 12 mit dem umgebenden Rundfilter 36 ist an einer Seite durch eine geschlossene Endplatte 56 und an der gegenüber liegenden Seite durch eine offene Endplatte 58 abgeschlossen. In der Öffnung der offenen Endplatte 58 ist das Verbindungselement 44 mit seinem Stutzen 60 angeordnet. Das Verbindungselement 44 schließt mit einem Bund 66 mit der offenen Endplatte 58 ab. Die Kartusche 10 weist einen radialen Lufteintritt durch den Feinfilterabschnitt 30 mit seinen Falten 64 auf. Die gefilterte Reinluft tritt durch den Strömungskanal 52 des Stutzens 60 aus der Kartusche 10 aus. Der Stutzen 60 weist auf seinem Außenumfang ein Außengewinde 76 zum Verbinden mit einer nicht dargestellten Atemschutzmaske 100 auf.

In Figur 7 ist dazu die Kartusche 10 mit dem Adsorptionsfilterabschnitt 12 als gewickelten Körper 24 und dem den Adsorptionsfilterabschnitt 12 umgebenden sternförmig gefalteten Rundfilter 36 als Feinfilterabschnitt 30 in teilgeschnittener Seitenansicht dargestellt. Der Adsorptionsfilterabschnitt 12 umfasst den gewickelten Körper 24 von Aktivkohleschichten 16, der radial zu der Längsachse 26 des Körpers 24 durchströmbar ist. Der Adsorptionsfilterabschnitt 12 mit dem umgebenden Rundfilter 36 als Feinfilterabschnitt 30 ist an einer Seite durch eine geschlossene Endplatte 56 und an der gegenüber liegenden Seite durch eine offene Endplatte 58 abgeschlossen. Das Verbindungselement 44 weist den Stutzen 60 auf, der mit der offenen Endplatte 58 verbunden ist. Das Verbindungselement 44 ist mit einer Nut 68 in der Öffnung der offenen Endplatte 58 angeordnet, wobei die Öffnung an der Außenseite der Kartusche 10 mit dem an dem Verbindungselement 44 überstehenden Bund 66 fluiddicht abgeschlossen ist. Das Verbindungselement 44 kann insbesondere durch die Nut 68 über eine Schnappverbindung mit der offenen Endplatte 58 verbunden sein.

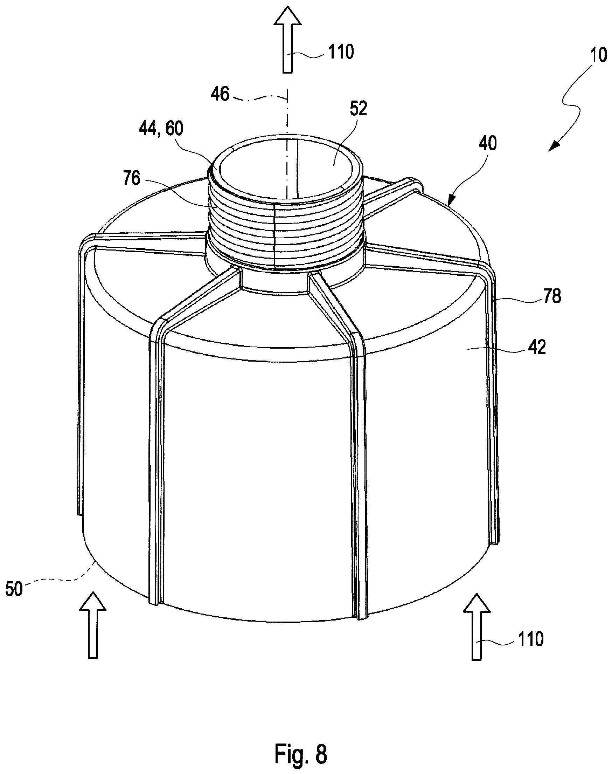

Figur 8 zeigt als eine isometrische Darstellung eine Kartusche 10 nach einem nicht erfindungsgemäßen Beispiel mit axialem Lufteintritt 50. Die Kartusche 10 weist einen glockenförmigen Gehäusemantel auf, an dessen Unterseite der axiale Lufteintritt 50 angeordnet ist. Der Gehäusemantel 42 kann in einer Ausführungsform mit dem Verbindungselement 44 lösbar, beispielsweise in Form einer Schnapp- oder Rastverbindung, verbunden sein, indem er über den Stutzen 60 des Verbindungselements 44 aufgeschoben ist und mit dem in Figur 8 nicht zu sehenden Bund 66 des Verbindungselements 44 fluiddicht abschließt. Der Gehäusemantel 42 ist durch Versteifungsrippen 78 verstärkt, so dass er mit geringerer Wandstärke ausgebildet sein kann, um dadurch vorteilhaft Gewicht einzusparen. Der Gehäusemantel 42 kann zusätzlich zum Schutz des innen liegenden Adsorptionsfilterabschnitts 12 und Feinfilterabschnitts 30 vor einer möglichen Beschädigung mit einem (nicht sichtbaren) vor dem Feinfilterabschnitt 30 angeordneten Schutzgitter 80 versehen sein.

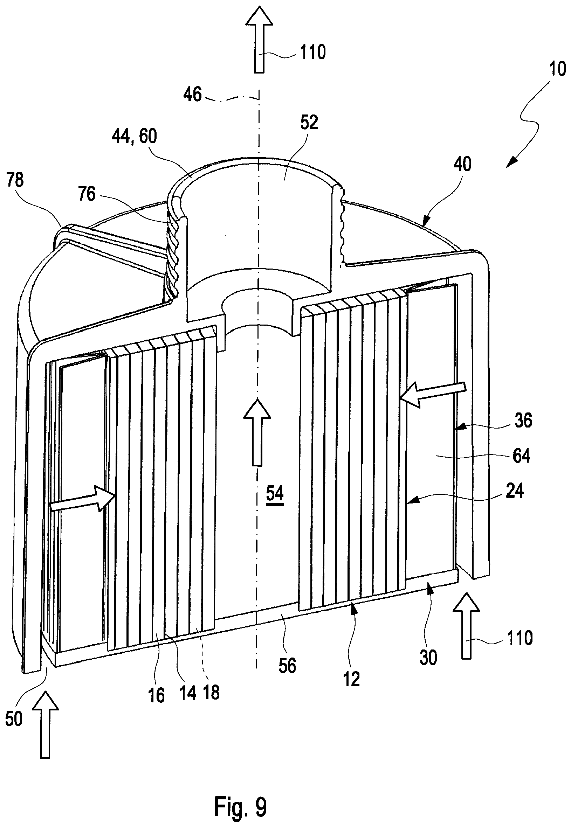

Figur 9 zeigt dazu in geschnittener isometrischer Darstellung eine Kartusche 10 nach einem weiteren nicht erfindungsgemäsen Beispiel mit einem gewickelten Körper 24 aus Aktivkohleschichten 16 als Adsorptionsfilterabschnitt 12 und einem den Adsorptionsfilterabschnitt 12 umgebenden sternförmig gefalteten Rundfilter 36 als Feinfilterabschnitt 30 mit axialem Lufteintritt 50. Die Kartusche 10 weist einen axialen Lufteintritt 50 auf. Die zu filternde Luft strömt in Strömungsrichtung 110 axial an einem Außenrand des den Adsorptionsfilterabschnitt 12 umgebenden Rundfilter 36 als Feinfilterabschnitt 30 in den Gehäusemantel 42 ein, da Adsorptionsfilterabschnitt 12 und Feinfilterabschnitt 30 an der Unterseite durch eine geschlossene Endplatte fluiddicht abgeschlossen sind. Die Luft strömt dann radial durch den Feinfilterabschnitt 30 und den Adsorptionsfilterabschnitt 12 auf die Reinluftseite 54 und tritt axial in Richtung der Gehäuselängsachse 46 in Strömungsrichtung 110 durch den Strömungskanal 52 des Stutzens 60 wieder aus der Kartusche 10 aus.

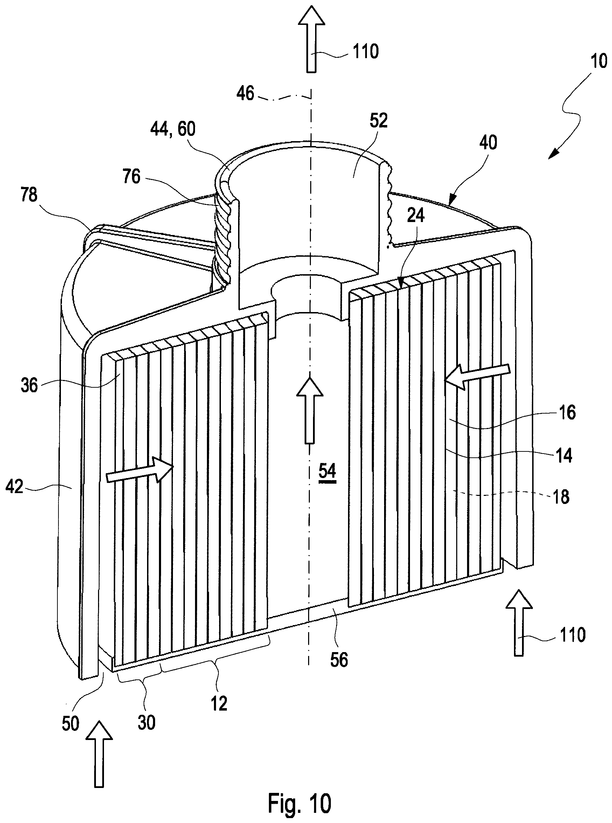

Figur 10 zeigt in geschnittener isometrischer Darstellung alternativ zu dem in Figur 9 dargestellten nicht erfindungsgemäßen Beispiel eine Kartusche 10 nach einem weiteren Ausführungsbeispiel der Erfindung mit einem gewickelten Körper 24 aus Aktivkohleschichten 16 als Adsorptionsfilterabschnitt 12 und einem den Adsorptionsfilterabschnitt 12 umgebenden mehrlagig schichtförmigen Rundfilter 36 als Feinfilterabschnitt 30 mit axialem Lufteintritt 50. Der Rundfilter 36 ist dabei mit einzelnen Lagen beispielsweise als mehrstufiger Gradientenfilter ausgebildet. Die Strömungsrichtungen 110 sind bei diesem Ausführungsbeispiel die gleichen wie bei dem in Figur 9 dargestellten Ausführungsbeispiel. Die Luft tritt axial von unten in den Gehäusemantel 42 ein, strömt radial durch den Feinfilterabschnitt 30 und den Adsorptionsfilterabschnitt 12 hindurch auf die Reinluftseite 54 und strömt dann axial entlang der Gehäuselängsachse 46 durch den Strömungskanal 52 des Stutzens 60 wieder ab.

Bei beiden in den Figuren 9 und 10 dargestellten nicht erfindungsgemäßen Beispielen ist der Gehäusemantel 42 mit dem Verbindungselement 44 einstückig verbunden. Ein solches Werkstück lässt sich beispielsweise in einem Spritzgussprozess günstig herstellen. Der Stutzen 60 ragt mit einem Teil in die Reinluftseite 54 des Adsorptionsfilterabschnitts 12 hinein, der durch den nach der Fertigung frei gewordenen Kernbereich des gewickelten Körpers 24 des Adsorptionsfilterabschnitts 12 gebildet wird. Auf diese Weise ist die Reinluftseite 54 fluiddicht mit dem Strömungskanal 52 des Stutzens 60 verbunden.

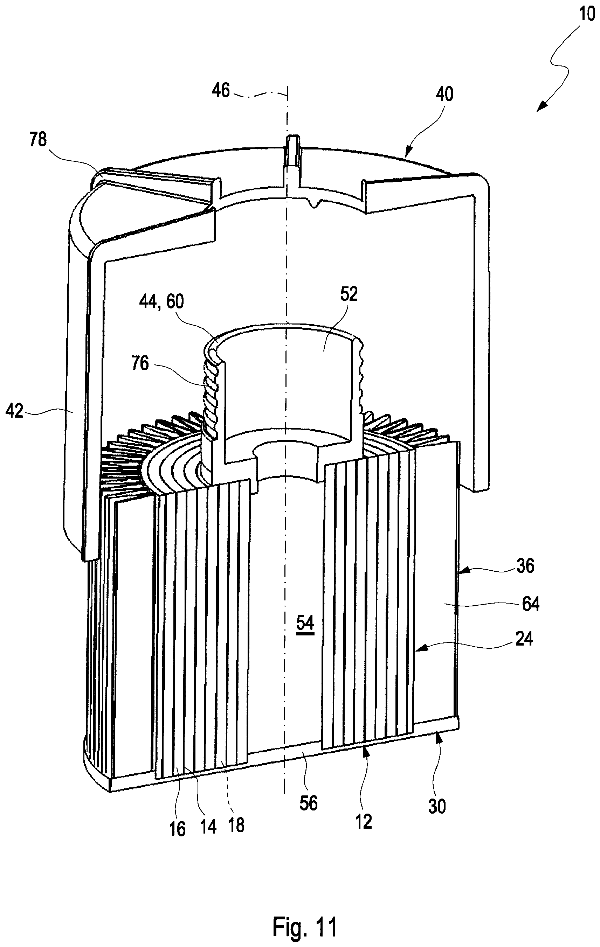

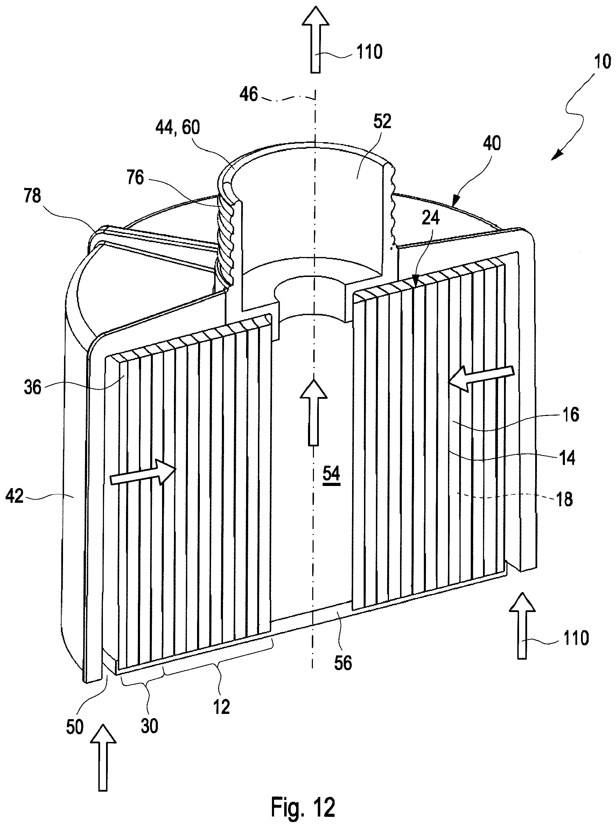

In Figur 11 ist in geschnittener isometrischer Darstellung eine erfindungsgemäße 2. Kartusche 10 mit einem gewickelten Körper 24 aus Aktivkohleschichten 16 als Adsorptionsfilterabschnitt 12 und einem den Adsorptionsfilterabschnitt 12 umgebenden sternförmig gefalteten Rundfilter 36 als Feinfilterabschnitt 30 mit abgehobenem Gehäusemantel 42 dargestellt. Das Verbindungselement 44 ist an einem Ende des Adsorptionsfilterabschnitts 12 so angeordnet, dass der Strömungskanal 52 fluiddicht mit der Reinluftseite 54 verbunden ist. Der lösbar ausgebildete Gehäusemantel 42 ist von dem Verbindungselement 44 nach oben abgezogen dargestellt, während in Figur 12 die Kartusche 10 von Figur 11 mit aufgesetztem Gehäusemantel 42 und ringförmig ausgebildetem, mehrlagig geschichtetem Rundfilter 36 um den Adsorptionsfilterabschnitt 12 dargestellt ist. Der Gehäusemantel 42 ist über den Stutzen 60 des Verbindungselements 44 aufgeschoben, so dass der Gehäusemantel 42 mit einer innen liegenden Fläche des Verbindungselements 44 bündig abschließt. Die Verbindung des Gehäusemantels 42 mit dem Verbindungselement 44 kann beispielsweise in Form einer Schnapp-, Rast- oder Gewindeverbindung ausgeführt sein, welche an dem mit dem Adsorptionsfilterabschnitt 12 abschließenden Bund des Verbindungselements 44 angeordnet sein kann. Alternativ kann für die Verbindung zwischen Gehäusemantel 42 und Verbindungselement 44 der Kartusche 10 ein Verbindungsmittel wie eine Lasche oder ein Schnappelement mit einer Sollbruchstelle vorgesehen sein, welches bei einem Entfernen des Gehäusemantels 42 zerstört wird und so ein Wiederverwenden der gebrauchten Kartusche 10 verhindert.

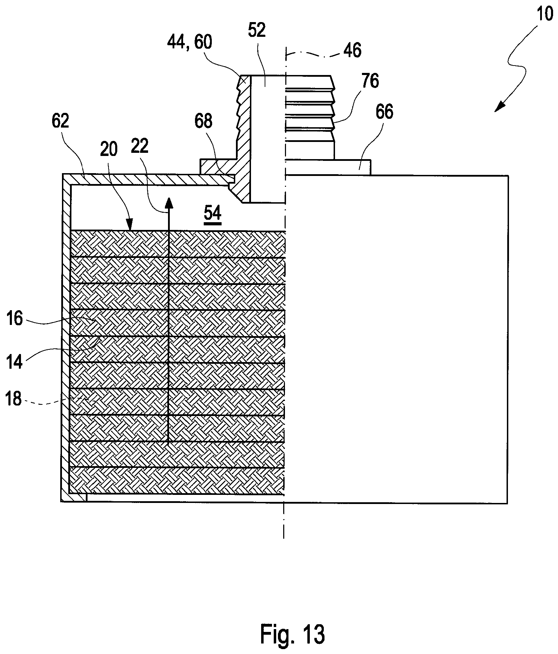

Figur 13 zeigt in teilgeschnittener Seitenansicht einen Adsorptionsfilterabschnitt 12 aus einem Stapel 20 von Aktivkohleschichten 16 mit einem an einem reinluftseitigen Deckel 62 angeordneten Verbindungselement 44. Der Adsorptionsfilterabschnitt 12 umfasst einen Stapel 20 von Aktivkohleschichten 16 mit einer axialen Stapelrichtung 22, der an der Reinluftseite 54 mit einem Deckel 62 abgeschlossen ist, wobei der Deckel 62 zweckmäßigerweise die radialen Außenseiten des Adsorptionsfilterabschnitts 12 überdeckt, um die radialen Außenseiten abzudichten sowie eine stabile Aufnahme für den Adsorptionsfilterabschnitt 12 zu bilden. Zwischen Deckel 62 und der Oberseite des Adsorptionsfilterabschnitts 12 ist dabei ein Freiraum ausgebildet, der zum Sammeln der gefilterten Luft auf der Reinluftseite 54 dient. Das Verbindungselement 44 ist in einer Öffnung des reinluftseitigen Deckels 62 des Stapels 20 angeordnet und greift mit einer Nut 68 in den Deckel 62 ein, so dass das Verbindungselement 44 fest und fluiddicht mit dem Deckel 62 verbunden ist.

Figur 14 zeigt in schematischer Darstellung eine Atemschutzmaske 100 nach einem Ausführungsbeispiel der Erfindung mit einer montierten Kartusche 10. Die Atemschutzmaske 100 weist ein durchströmbares Gegenelement 102 auf, an welches das durchströmbare Verbindungselement 44 der Kartusche 10 angekoppelt werden kann. Üblicherweise ist das Verbindungselement 44 der Kartusche 10 mit einem Außengewinde 76 versehen, welches in ein Innengewinde des Gegenelements 102 eingreift und mit diesem verschraubt werden kann. Alternativ ist auch denkbar, die Verbindung von Atemschutzmaske 100 und Kartusche 10 über eine Bajonettverbindung auszubilden.

Die Kartusche 10 bei dem in Figur 14 dargestellten Ausführungsbeispiel weist einen axialen Lufteintritt 50 durch die Kartuschenunterseite auf. Der Gehäusemantel 42 ist zum Schutz des innen liegenden Adsorptionsfilterabschnitts 12 und Feinfilterabschnitts 30 mit einem Schutzgitter 80 versehen.

Strömungsseitig innerhalb des Gegenelements 102 kann ein Absperrelement 104 vorgesehen sein, welches bei entfernter Kartusche 10 das Gegenelement 102 fluiddicht abschließt. Mit Hilfe des Absperrelements 104, das beispielsweise in Form einer Ventilmembran, beispielsweise als Elastomer, ausgeführt sein kann, kann verhindert werden, dass bei einem Wechsel der Kartusche 10 Luft mit möglicherweise gefährdenden Stoffen in die Atemschutzmaske 100 gelangen und so eingeatmet werden kann.

## Patentansprüche

1. Kartusche (10) für eine Atemschutzmaske (100), mit einem in einem Gehäuse (40) angeordneten Adsorptionsfilterabschnitt (12), wobei der Adsorptionsfilterabschnitt (12) ein Trägermedium (14) und eine Aktivkohleschicht (16) aufweist, in der Aktivkohlepartikel durch Zusatz eines Fixierungsmittels (18) immobilisiert sind, wobei ein durchströmbares Verbindungselement (44) zum Befestigen des Gehäuses (40) an der Atemschutzmaske (100) vorgesehen ist, wobei das Verbindungselement (44) mit seinem Strömungskanal (52) an einer Reinluftseite (54) des Adsorptionsfilterabschnitts (12) angeordnet ist, **dadurch gekennzeichnet, dass** das Gehäuse (40) einen Gehäusemantel (42) aufweist, der mit dem Verbindungselement (44) lösbar verbindbar ist.

2. Kartusche nach Anspruch 1, wobei wenigstens ein, dem Adsorptionsfilterabschnitt (12) strömungsmäßig vorgeschalteter Feinfilterabschnitt (30) zur Abscheidung von Verunreinigungen aus der Atemluft, insbesondere zur Abscheidung von Aerosolen, vorgesehen ist.

3. Kartusche nach Anspruch 1 oder 2, wobei das Fixierungsmittel (18) in der Aktivkohleschicht (16) ein reaktiver Klebstoff ist, beispielsweise auf Basis von Polyurethan oder Silan, oder wobei der Klebstoff in der Aktivkohleschicht ein thermoplastischer Klebstoff ist, beispielsweise auf Basis von Polyolefinen.

4. Kartusche nach einem der vorhergehenden Ansprüche, wobei das Trägermedium (14) als Vlies, insbesondere als Filtervlies zur Partikelabscheidung, ausgebildet ist.

5. Kartusche nach einem der vorhergehenden Ansprüche, wobei der Adsorptionsfilterabschnitt (12) einen Stapel (20) von Aktivkohleschichten (16) mit einer axialen Stapelrichtung (22) umfasst, der in axialer Stapelrichtung (22) durchströmbar ist.

6. Kartusche nach einem der Ansprüche 1 bis 4, wobei der Adsorptionsfilterabschnitt (12) einen gewickelten Körper (24) von Aktivkohleschichten (16) umfasst, der radial zu einer Längsachse (26) des Körpers (24) durchströmbar ist.

7. Kartusche nach einem der vorhergehenden Ansprüche, wobei der Feinfilterabschnitt (30) einen Filterstapel (32) aufweist, der in Filterstapelrichtung (34) durchströmbar und einseitig vor dem Adsorptionsfilterabschnitt (12) angeordnet ist.

8. Kartusche nach einem der Ansprüche 1 bis 6, wobei der Feinfilterabschnitt (30) einen Rundfilter (36) aufweist, der radial zu einer Längsachse (38) des Rundfilters (36) durchströmbar ist.

9. Kartusche nach einem der vorhergehenden Ansprüche, wobei der Feinfilterabschnitt (30) einen Rundfilter (36) aufweist, der den Adsorptionsfilterabschnitt (12) umgibt.

10. Kartusche nach Anspruch 8 oder 9, wobei der Rundfilter (36) mehrlagig, insbesondere mehrstufig, ausgebildet ist.

11. Kartusche nach einem der Ansprüche 8 bis 10, wobei der Rundfilter (36) gefaltet ausgebildet ist.

12. Kartusche nach einem der vorhergehenden Ansprüche, wobei das Gehäuse (40) bezogen auf eine Gehäuselängsachse (46) einen radialen Lufteintritt (48) aufweist.

13. Kartusche nach einem der vorhergehenden Ansprüche, wobei das Gehäuse (40) bezogen auf eine Gehäuselängsachse (46) einen axialen Lufteintritt (50) aufweist.

14. Kartusche nach einem der vorhergehenden Ansprüche, wobei der Adsorptionsfilterabschnitt (12) einen gewickelten Körper (24) von Aktivkohleschichten (16) umfasst, der radial zu einer Längsachse (26) des Körpers (24) durchströmbar ist, mit einer geschlossenen Endplatte (56) und einer offenen Endplatte (58), wobei das Verbindungselement (44) einen Stutzen (60) aufweist, der mit der offenen Endplatte (58) verbunden ist.

15. Kartusche nach einem der vorhergehenden Ansprüche, wobei der Adsorptionsfilterabschnitt (12) einen Stapel (20) von Aktivkohleschichten (16) mit einer axialen Stapelrichtung (22) umfasst, der in axialer Stapelrichtung (22) durchströmbar ist, wobei das Verbindungselement (44) an einem reinluftseitigen Deckel (62) des Stapels (20) angeordnet ist.

16. Kartusche nach einem der vorhergehenden Ansprüche, wobei Mittel vorgesehen sind, die eine Wiederverwendung einer gebrauchten Kartusche unterbinden.

17. Atemschutzmaske (100) mit einer Kartusche (10) nach einem der vorhergehenden Ansprüche, umfassend ein durchströmbares Gegenelement (102) für ein durchströmbares Verbindungselement (44) der Kartusche (10).

18. Atemschutzmaske nach Anspruch 17, wobei ein Absperrelement (104) vorgesehen ist, welches bei entfernter Kartusche (10) das Gegenelement (102) fluiddicht abschließt.

## Claims

1. Cartridge (10) for a respirator (100) having an adsorption filter portion (12) disposed in a housing (40), wherein the adsorption filter portion (12) features a carrier medium (14) and an activated carbon stratum (16) in which activated carbon particles are immobilized by adding a fixative (18), wherein a connecting element (44) capable of being flowed through is provided for attaching the housing (40) to the respirator (100), wherein the connecting element (44) with its flow channel (52) is disposed on a clean air side (54) of the adsorption filter portion (12), **characterized in that** the housing (40) features a housing casing (42) which is releasably connectable to the connecting element (44).

2. Cartridge according to claim 1, wherein at least one fine filter portion (30) fluidically upstream of the adsorption filter portion (12) is provided for extracting impurities from the breathing air, in particular for extracting aerosols.

3. Cartridge according to claim 1 or 2, wherein the fixative (18) in the activated carbon stratum (16) is a reactive adhesive, for example on the basis of polyurethane or silane, or wherein the adhesive in the activated carbon stratum is a thermoplastic adhesive, for example on the basis of polyolefins.

4. Cartridge according to one of the preceding claims, wherein the carrier medium (14) is designed as non-woven fabric, in particular as filter fleece for particulate removal.

5. Cartridge according to one of the preceding claims, wherein the adsorption filter portion (12) comprises a stack (20) of activated carbon strata (16) having an axial stack direction (22) and which is capable of being flowed through in the axial stack direction (22).

6. Cartridge according to one of the claims 1 to 4, wherein the adsorption filter portion (12) comprises a wound body (24) of activated carbon strata (16), the body being capable of being flowed through radially with respect to a longitudinal axis (26) of the body (24).

7. Cartridge according to one of the preceding claims, wherein the fine filter portion (30) features a filter stack (32) capable of being flowed through in filter stack direction (34) and disposed on one side in front of the adsorption filter portion (12).

8. Cartridge according to one of the claims 1 to 6, wherein the fine filter portion (30) features a round filter (36) capable of being flowed through radially with respect to a longitudinal axis (38) of the round filter (36).

9. Cartridge according to one of the preceding claims, wherein the fine filter portion (30) features a round filter (36) surrounding the adsorption filter portion (12).

10. Cartridge according to claim 8 or 9, wherein the round filter (36) has a multilayer design, in particular a multi-stage design.

11. Cartridge according to one of the claims 8 to 10, wherein the round filter (36) is folded.

12. Cartridge according to one of the preceding claims, wherein the housing (40) features, with respect to a housing longitudinal axis (46), a radial air inlet (48).

13. Cartridge according to one of the preceding claims, wherein the housing (40) features, with respect to a housing longitudinal axis (46), an axial air inlet (50).

14. Cartridge according to one of the preceding claims, wherein the adsorption filter portion (12) comprises a wound body (24) of activated carbon strata (16), the body being capable of being flowed through radially with respect to a longitudinal axis (26) of the body (24), with a closed end plate (56) and an open end plate (58), wherein the connecting element (44) features a piping connection (60) connected to the open end plate (58).

15. Cartridge according to one of the preceding claims, wherein the adsorption filter portion (12) comprises a stack (20) of activated carbon strata (16) having an axial stack direction (22) and which is capable of being flowed through in the axial stack direction (22), wherein the connecting element (44) is disposed on a clean-air-sided cover (62) of the stack (20).

16. Cartridge according to one of the preceding claims, wherein means are provided for preventing reuse of a used cartridge.

17. Respirator (100) having a cartridge (10) according to one of the preceding claims, comprising a counterpart (102) capable of being flowed through for a connecting element (44) capable of being flowed through of the cartridge (10).

18. Respirator according to claim 17, wherein a shut-off element (104) is provided which closes the counterpart (102) in a fluid-tight manner when the cartridge (10) is removed.

## Revendications

1. Cartouche (10) pour un masque de protection respiratoire (100), ayant une section de filtre d'adsorption (12) disposée dans un boîtier (40), la section de filtre d'adsorption (12) présentant un milieu de support (14) et une couche de charbon actif (16) dans laquelle des particules de charbon actif sont immobilisées par ajout d'un agent fixateur (18), un élément de raccordement (44) pouvant être parcouru étant prévu pour fixer le boîtier (40) au masque de protection respiratoire (100), l'élément de raccordement (44) étant disposé, avec son canal d'écoulement (52), d'un côté air pur (54) de la section de filtre d'adsorption (12), **caractérisé en ce que** le boîtier (40) présente une enveloppe de boîtier (42) qui peut être reliée de manière amovible à l'élément de raccordement (44).

2. Cartouche selon la revendication 1, au moins une section de filtre fin (30) disposée fluidiquement en amont de la section de filtre d'adsorption (12) étant prévue afin de séparer les impuretés de l'air inhalé, notamment de séparer les aérosols.

3. Cartouche selon la revendication 1 ou 2, l'agent fixateur (18) dans la couche de charbon actif (16) étant un adhésif réactif, par exemple à base de polyuréthane ou de silane, ou l'adhésif dans la couche de charbon actif étant un adhésif thermoplastique, par exemple à base de polyoléfines.

4. Cartouche selon l'une quelconque des revendications précédentes, le milieu de support (14) étant exécuté en tant que non-tissé, notamment en tant que filtre en non-tissé destiné à séparer les particules.

5. Cartouche selon l'une quelconque des revendications précédentes, la section de filtre d'adsorption (12) comprenant un empilement (20) de couches de charbon actif (16) orientées en sens axial de l'empilement (22) qui peut être parcourue en sens axial de l'empilement (22).

6. Cartouche selon l'une quelconque des revendications 1 à 4, la section de filtre d'adsorption (12) comprenant un corps enroulé (24) de couches de charbon actif (16) qui peut être parcouru en sens radial par rapport à un axe longitudinal (26) du corps (24).

7. Cartouche selon l'une quelconque des revendications précédentes, la section de filtre fin (30) présentant un empilement de filtres (32) qui peut être parcouru dans le sens de l'empilement de filtres (34) et qui est disposé, d'un côté, en amont de la section de filtre d'adsorption (12).

8. Cartouche selon l'une quelconque des revendications 1 à 6, la section de filtre fin (30) présentant un filtre circulaire (36) qui peut être parcouru en sens radial par rapport à un axe longitudinal (38) du filtre circulaire (36).

9. Cartouche selon l'une quelconque des revendications précédentes, la section de filtre fin (30) présentant un filtre circulaire (36) qui encercle la section de filtre d'adsorption (12).

10. Cartouche selon la revendication 8 ou 9, le filtre circulaire (36) comportant plusieurs couches, notamment plusieurs niveaux.

11. Cartouche selon l'une quelconque des revendications 8 à 10, le filtre circulaire (36) étant plié.

12. Cartouche selon l'une quelconque des revendications précédentes, le boîtier (40) présentant une entrée d'air radiale (48) par rapport à un axe longitudinal du boîtier (46).

13. Cartouche selon l'une quelconque des revendications précédentes, le boîtier (40) présentant une entrée d'air axiale (50) par rapport à un axe longitudinal du boîtier (46).

14. Cartouche selon l'une quelconque des revendications précédentes, la section de filtre d'adsorption (12) comportant un corps enroulé (24) de couches de charbon actif (16) qui peut être parcouru en sens radial par rapport à un axe longitudinal (26) du corps (24), avec une plaque d'extrémité fermée (56) et une plaque d'extrémité ouverte (58), l'élément de raccordement (44) présentant une tubulure (60) qui est reliée à la plaque d'extrémité ouverte (58).

15. Cartouche selon l'une quelconque des revendications précédentes, la section de filtre d'adsorption (12) comprenant un empilement (20) de couches de charbon actif (16) orientées en sens axial de l'empilement (22) qui peut être parcourue en sens axial de l'empilement (22), l'élément de raccordement (44) étant disposé sur un couvercle côté air pur (62) de l'empilement (20).

16. Cartouche selon l'une quelconque des revendications précédentes, des moyens empêchant la réutilisation d'une cartouche usagée étant prévus.

17. Masque de protection respiratoire (100) ayant une cartouche (10) selon l'une quelconque des revendications précédentes, comprenant un contre-élément (102) pouvant être parcouru pour un élément de raccordement (44), pouvant être parcouru, de la cartouche (10).

18. Masque de protection respiratoire selon la revendication 17, un élément d'arrêt (104) obturant le contre-élément (102) de manière étanche aux fluides en cas de retrait de la cartouche (10) étant prévu.
